# EUROPÄISCHE PATENTANMELDUNG

(11) **EP 1 283 649 A1**
(43) Veröffentlichungstag der Anmeldung: **12.02.2003**
(21) Anmeldenummer: 01119177.2
(22) Anmeldetag: 08.08.2001
(51) Int. Cl.: H04Q 7/38

(54) **Verfahren und Anordnung für effektive Handover in einem Datenübertragungssystem bei Datenübertragungen in Abwärtsrichtung**

(71) Anmelder: SIEMENS AKTIENGESELLSCHAFT, 80333 München (DE)
(72) Erfinder: Dillinger, Markus, 81737 München (DE); Salzmann, Christian, 80634 München (DE)

(57) **Zusammenfassung**

Beschrieben wird eine Möglichkeit zur Durchführung eines Handovers eines mobilen Endgerätes in einem Datenübertragungssystem. In der Abwärtsrichtung (DL) des Datenaustausches vom Datenübertragungssystem hin zum mobilen Endgerät (MT) werden die zu übertragenden Daten (Data1, Data2) parallel an mehrere Datenspeicher (P-RM, S-RM) innerhalb des Datenübertragungssystems weitergeleitet. Vor dem Handover (HO) erfolgt der Datenaustausch mit einem ersten Datenspeicher (P-RM-DB2) und nach dem Handover mit einem zweiten Datenspeicher (P-RM-DB3).

## Beschreibung

Die vorliegende Erfindung betrifft ein Verfahren zur Durchführung eines Handovers eines mobilen Endgerätes in einem Datenübertragungssystem von einer ersten Sende-/Empfangseinrichtung des Datenübertragungssystems zu einer zweiten Sende-/Empfangseinrichtung während eines Datenaustausches zwischen dem Datenübertragungssystem und dem mobilen Endgerät. Weiterhin wird ein Datenübertragungssystem mit mehreren Sende-/Empfangseinrichtungen und Vermittlungseinrichtungen zum Datenaustausch mit mobilen Endgeräten sowie ein mobiles Endgerät für ein Datenübertragungssystem mit mehreren Sende-/Empfangseinrichtungen und Vermittlungseinrichtungen zum Datenaustausch mit mobilen Endgeräten beschrieben.

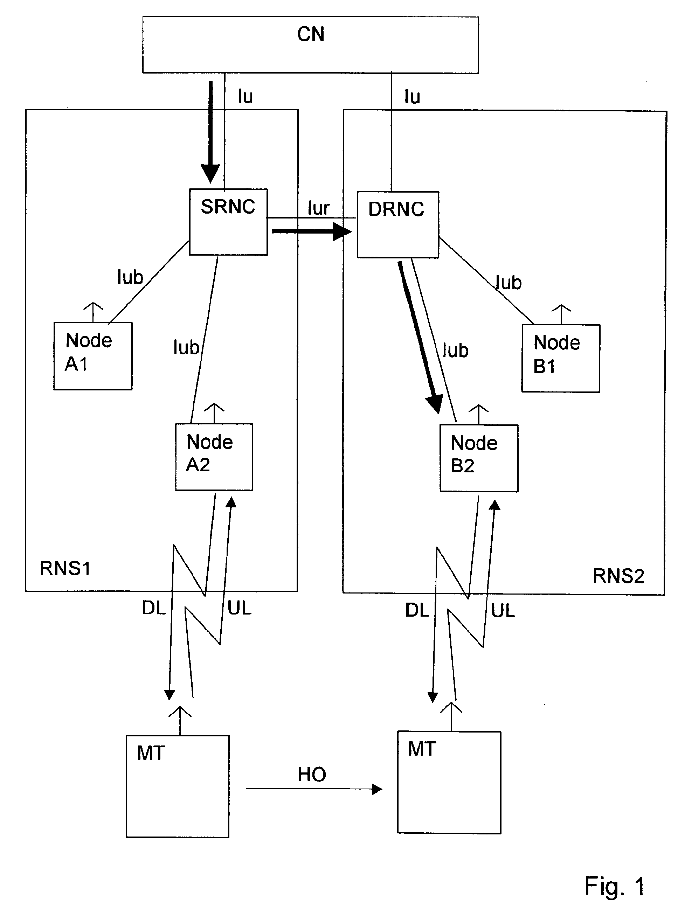

Solche mobile Datenübertragungssysteme sind hinreichend aus dem Stand der Technik bekannt und beispielsweise als Mobilfunknetze der zweiten oder dritten Generation (z.B. GSM, UMTS), lokale Funknetze (z.B. DECT, HIPERLAN) oder sonstige Datenfunknetze (z.B. GPRS) ausgebildet. Hierzu sei beispielhaft auf die EP 0 766 490 A2 verwiesen, die ein HIPERLAN-Netz beschreibt. In diesen Datenübertragungssystemen können sowohl Kommunikationsdaten wie beispielsweise Sprachdaten, wie auch sonstige Anwendungsdaten wie Multimediadaten oder SoftwareProgramme und andere Software-Dateien übertragen werden. Auch Handover-Verfahren zur Verbindungsweiterschaltung für solche Datenübertragungssysteme sind grundsätzlich aus dem Stand der Technik bekannt. Ein übliches Handover-Verfahren nach dem Stand der Technik ist in Fig. 1 dargestellt und wird nachfolgend erläutert.

Die mobilen Endgeräte für mobile Datenübertragungssysteme werden zunehmend intelligenter und der Datenaustausch zwischen den Endgeräten und dem Datenübertragungssystem nimmt ständig zu. Ein Beispiel für solche intelligenten Endgeräte sind software-rekonfigurierbare Endgeräte, wie sie beispielsweise in der US 6,185,418 beschrieben sind. Um einen für den Betrieb mobiler Endgeräte kontinuierlichen Datenaustausch zwischen dem Datenübertragungssystem und dem Endgerät auch für den Fall eines Handovers, also des Wechsels des Endgerätes von einer ersten zu einer zweiten versorgenden Sende-/Empfangseinrichtung, zu garantieren, wurde bei bisherigen Handover-Verfahren der Datenstrom lokal zu den entsprechenden Netzkomponenten der zweiten Sende-/Empfangseinrichtung umgelenkt. Dies hat den entscheidenden Nachteil, dass potenziell bei jedem Handover, also bei jedem Wechsel des Endgerätes zu einer anderen Sende-/Empfangseinrichtung, der Pfad des Datenstroms durch das Umlenken verlängert wird und so eine erhöhte Netzlast durch den entsprechenden Datenverkehr entsteht. Dies führt einerseits zu einer unnötigen Belegung von Übertragungskapazitäten innerhalb des mobilen Datenübertragungssystems, andererseits kann durch die verlängerten Laufzeiten unter Umständen eine erforderliche Qualität der Datenübertragung nicht mehr garantiert werden.

Aufgabe der vorliegenden Erfindung ist es daher, eine verbesserte Möglichkeit für einen Handover in einem mobilen Datenübertragungssystem bei Datenübertragungen, insbesondere in Abwärtsrichtung, bereitzustellen. Diese Aufgabe wird gelöst durch die jeweiligen Merkmale der unabhängigen Patentansprüche. Vorteilhafte Ausgestaltungen der Erfindung sind den jeweiligen abhängigen Patentansprüchen entnehmbar.

Ein erster Gegenstand der vorliegenden Erfindung ist ein Verfahren zur Durchführung eines Handovers eines mobilen Endgerätes in einem mobilen Datenübertragungssystem von einer ersten Sende-/Empfangseinrichtung des mobilen Datenübertragungssystems zu einer zweiten Sende-/Empfangseinrichtung während eines Datenaustausches zwischen dem mobilen Datenübertragungssystem und dem mobilen Endgerät. Gemäß der Erfindung werden in der Abwärtsrichtung des Datenaustausches vom mobilen Datenübertragungssystem hin zum mobilen Endgerät die zu übertragenden Daten parallel an mehrere Datenspeicher innerhalb des mobilen Datenübertragungssystems weitergeleitet. Die Datenspeicher sind Vermittlungseinrichtungen und/oder Sende-/Empfangseinrichtungen des mobilen Datenübertragungssystems zugeordnet. Vor dem Handover erfolgt der Datenaustausch zwischen dem mobilen Datenübertragungssystem und dem mobilen Endgerät mit einem ersten Datenspeicher und nach dem Handover erfolgt der Datenaustausch zwischen dem mobilen Datenübertragungssystem und dem mobilen Endgerät mit einem zweiten Datenspeicher.

Durch dieses Verfahren wird ein Umlenken des Datenstroms entbehrlich, die Gefahr eines immer länger werdenden Pfades des Datenstromes innerhalb des mobilen Datenübertragungssystems entfällt. Es werden vielmehr von Anfang an die an das mobile Endgerät zu übertragenden Daten parallel mehreren Datenspeichern zugeführt, so dass die entsprechenden Daten im Datenübertragungssystem redundant vorliegen. Es kann dann direkt ein Datenaustausch zwischen dem Endgerät und dem jeweils innerhalb der Architektur des Datenübertragungssystems nächstliegenden Datenspeichers erfolgen, die Pfade des Datenstroms werden also deutlich optimiert.

Eine Möglichkeit, eine kontinuierliche Datenübertragung ohne Datenverluste zwischen dem Endgerät und dem Datenübertragungssystem zu realisieren, ist, dass das Ende des Datenaustausches mit dem ersten Datenspeicher durch das mobile Endgerät gekennzeichnet wird und diese Kennzeichnung zur Fortsetzung des Datenaustausches mit dem zweiten Datenspeicher an die zweite Sende-/Empfangseinrichtung übertragen wird. Als Kennzeichnung kann beispielsweise eine relative oder absolute Adressierung der letzten, erfolgreich an das Endgerät übertragenen Daten verwendet werden. Damit kann das Endgerät selbst den vollständigen Empfang der Daten überwachen und gegebenenfalls steuern, bzw. aktiv auf die im Datenübertragungssystem bereitgehaltenen Daten zugreifen.

Um die Weiterleitung der an das Endgerät zu übertragenden Daten innerhalb des Datenübertragungssystems möglichst effektiv zu gestalten, kann insbesondere vorgesehen werden, dass die zum mobilen Endgerät zu übertragenden Daten - automatisch oder gesteuert durch eine Anfrage des mobilen Endgerätes - jeweils hierarchisch von einer übergeordneten Hierarchieebene der Datenspeicher an eine untergeordnete Hierarchieebene der Datenspeicher übertragen werden. Es können dabei beispielsweise je nach Wichtigkeit der zu übertragenden Daten oder beispielsweise der Zahl der Endgeräte, die diese Daten benötigen, unterschiedliche Daten in unterschiedlichen Hierarchieebenen der Datenspeicher bereit gehalten werden. Sind beispielsweise Daten für die Aktualisierung sämtlicher Endgeräte zur Übertragung vorgesehen, so kann es effektiver sein, diese möglichst weit verbreitet innerhalb des Datenübertragungssystems, also in einer möglichst niedrigen Hierarchieebene, bereit zu halten. Betreffen die Daten jedoch nur einzelne oder nur ein einziges Endgerät, so kann zur Effizienzerhöhung des Datenübertragungsaufkommens innerhalb des Datenübertragungssystems vorgesehen werden, dass diese Daten auf einer höheren Hierarchieebene der Datenspeicher bereitgehalten werden.

Speziell kann das Handover-Verfahren unter Verwendung einer hierarchischen Datenspeicher-Struktur derart erfolgen, dass die vom mobilen Endgerät übertragene Kennzeichnung an die unterste Hierarchieebene der Datenspeicher weitergeleitet wird und zunächst innerhalb dieser Hierarchieebene eine Überprüfung der Verfügbarkeit der an das Endgerät zu übertragenden Daten erfolgt. Sind die zu übertragenden Daten innerhalb des Datenspeichers dieser Hierarchieebene verfügbar, so kann eine unmittelbare Fortsetzung der Datenübertragung an das mobile Endgerät ausgehend von dem Datenspeicher der untersten Hierarchieebene erfolgen. Sind die zu übertragenden Daten jedoch in dem Datenspeicher dieser Hierarchieebene nicht verfügbar, so erfolgt zuerst eine Anfrage an eine übergeordnete Hierarchieebene der Datenspeicher zur Übertragung der Daten an die unterste Hierarchieebene der Datenspeicher und anschließend, also nach erfolgter Übertragung der Daten zu dem Datenspeicher der niedrigeren Hierarchieebene, wird eine Fortsetzung der Datenübertragung an das mobile Endgerät ausgehend von dem Datenspeicher der untersten Hierarchieebene durchgeführt.

Ein weiterer Gegenstand der vorliegenden Erfindung ist ein mobiles Datenübertragungssystem mit mehreren Sende-/Empfangseinrichtungen und Vermittlungseinrichtungen zum Datenaustausch mit mobilen Endgeräten. Gemäß der vorliegenden Erfindung sind innerhalb des mobilen Datenübertragungssystems mehrere Datenspeicher vorgesehen, welche Vermittlungseinrichtungen und/oder Sende-/Empfangseinrichtungen des mobilen Datenübertragungssystems zugeordnet sind, und die zur Speicherung von Daten, welche an ein mobiles Endgerät zu übertragen sind, ausgebildet sind. Dadurch wird ermöglicht, dass die an ein Endgerät zu übertragenden Daten innerhalb des Datenübertragungssystems in mehreren Datenspeichern redundant bereit gehalten werden können. Es muss dann bei einem Handover des Endgerätes von einer Sende-/Empfangseinrichtung zu einer weiteren Sende-/Empfangseinrichtung kein Umlenken des Datenstromes erfolgen, wie bereits vorstehend ausgeführt, sondern es kann direkt auf die redundant in den entsprechenden Datenspeichern vorliegenden Daten zugegriffen werden. Die dadurch entstehenden Vorteile wurden bereits im Rahmen des vorstehend beschriebenen erfindungsgemäßen Verfahrens erläutert.

Vorteilhaft kann vorgesehen werden, dass das mobile Datenübertragungssystem eine hierarchische Netzstruktur aus Sende-/Empfangseinrichtungen und Vermittlungseinrichtungen und übergeordneten Netzstrukturen aufweist und die Datenspeicher ebenfalls eine hierarchische Struktur aufweisen, bei der jede Hierarchieebene einer entsprechenden Hierarchieebene der Netzstruktur des mobilen Datenübertragungssystems entspricht.

Die Struktur der Datenspeicher bildet also eine Art überlagertes Netzwerk über der Netzstruktur des Datenübertragungssystems, wobei zusätzlich eine Zuordnung der Hierarchieebene der Datenspeicher zu den Hierarchieebenen des Datenübertragungssystems gegeben ist.

Eine spezielle Möglichkeit der Realisierung eines effektiven Datenaustausches zwischen einem mobilen Endgerät und einer vorstehend beschriebenen hierarchischen Struktur von Datenspeichern kann dadurch realisiert werden, dass zumindest den Datenspeichern der untersten Hierarchieebenen eine Einrichtung zugeordnet ist, die zur Überprüfung der Verfügbarkeit der zu übertragenden Daten in dem entsprechenden Datenspeicher und zur Einleitung einer Übertragung der zu übertragenden Daten bei Nicht-Verfügbarkeit von einer übergeordneten Hierarchieebene der Datenspeicher an den zugeordneten Datenspeicher ausgebildet ist. Dadurch kann erreicht werden, dass die an ein Endgerät zu übertragenden Daten nicht in jeder Hierarchieebene bzw. nicht in allen Datenspeichern der untersten Hierarchieebene bereit gehalten werden muss, was speziell bei endgeräte-individuellen Daten einen zu hohen Datenspeicheraufwand bedeuten könnte. Es können vielmehr, wie bereits anhand des vorstehend beschriebenen Verfahrens erläutert, die Daten z.B. je nach Bedeutung oder Bedarf in einer geeigneten Hierarchieebene bereit gehalten werden. Die Einrichtung zur Überprüfung der Verfügbarkeit der Daten und zur Einleitung einer Datenübertragung kann dabei entweder durch bereits innerhalb des Datenübertragungssystems vorhandene Einrichtungen oder durch entsprechende, zusätzliche Einrichtungen realisiert werden.

Schließlich umfasst die vorliegende Erfindung ein mobiles Endgerät für ein mobiles Datenübertragungssystem mit mehreren Sende-/Empfangseinrichtungen und Vermittlungseinrichtungen zum Datenaustausch mit mobilen Endgeräten. Das mobile Endgerät weist erfindungsgemäß eine Einrichtung zur Kennzeichnung eines Endes des Datenaustausches über eine erste Sende-/Empfangseinrichtung mit einem ersten Datenspeicher und zur Übertragung der Kennzeichnung an eine zweite Sende-/Empfangseinrichtung auf. Durch eine solche Einrichtung kann seitens des Endgerätes im Rahmen eines Handovers das Ende der Datenübertragung von einer ersten Sende-/Empfangseinrichtung zu dem Endgerät gekennzeichnet werden und nach einem erfolgten Handover zu einer zweiten Sende-/Empfangseinrichtung gesteuert durch eine Anforderung des Endgerätes die Datenübertragung durch die zweite Sende-/Empfangseinrichtung wieder aufgenommen werden. Damit ist eine einfache und effektive Steuerung der Datenübertragung im Rahmen eines Handovers möglich. Dies kann insbesondere dann vorteilhaft erfolgen, wenn die an das Endgerät zu übertragenden Daten innerhalb des Datenübertragungssystems redundant vorliegen, wie vorstehend beschrieben wurde.

Insbesondere kann das mobile Endgerät als ein software-rekonfigurierbares Endgerät ausgebildet sein, wie sie grundsätzlich aus dem Stand der Technik bekannt sind. Gerade für solche Endgeräte besteht häufig die Notwendigkeit einer Datenübertragung zu dem Endgerät, weshalb die Datenübertragung möglichst effektiv abgewickelt werden soll. Andererseits sind solche Endgeräte besonders geeignet für die Verarbeitung größerer Datenübertragungen vom Datenübertragungssystem zum Endgerät hin ausgebildet.

Ein spezielles Ausführungsbeispiel wird nachfolgend anhand der Figuren 1 bis 3 erläutert.

### Es zeigen:

- Fig. 1:: Handover-Verfahren in einem mobilen Datenübertragungssystem nach dem Stand der Technik
- Fig. 2:: Erfindungsgemäßes Datenübertragungssystem und Endgerät für ein erfindungsgemäßes Verfahren
- Fig. 3:: Schematische Darstellung einer erfindungsgemäßen Datenübertragung zu einem Endgerät während eines Handovers

Fig. 1 zeigt den Ablauf eines Handovers nach dem Stand der Technik, beispielsweise innerhalb eines HIPERLAN oder HIPERLAN/2-Netzes bzw. eins UMTS-Netzes. Dabei weist das mobile Datenübertragungssystem nach dem Stand der Technik mehrere Subsysteme RNS1, RNS2 (Radio Network Subsystem) auf, in der der Datenverkehr jeweils von einer Vermittlungseinrichtung RNC (Radio Network Controller) verwaltet wird. Diese Subsysteme RNS1, RNS2 sind über eine Daten-Schnittstelle Iu mit übergeordneten Netzstrukturen CN (Core Network) verbunden. Die Vermittlungseinrichtungen RNC sind wiederum über eine weitere Daten-Schnittstelle Iur untereinander verbunden, die somit auch die Daten-Schnittstelle zwischen einzelnen Untereinheiten bildet. Weiterhin sind die Vermittlungseinrichtungen RNC über eine Daten-Schnittstelle Iub mit Sende-/Empfangseinrichtungen (Node A1, Node A2, Node B1, Node B2) verbunden, die über eine definierte Luftschnittstelle eine Mobilfunk-Datenverbindung zu mobilen Endgeräten MT herstellen und eine oder mehrere jeweilige Funkzellen ausleuchten. Die Datenverbindung von dem mobilen Datenübertragungssystem zu dem Endgerät MT wird dabei als Abwärtsrichtung (Downlink DL), die Datenverbindung von dem Endgerät MT zu dem mobilen Datenübertragungssystem als Aufwärtsrichtung (Uplink UL) bezeichnet.

In Fig. 1 ist nun das übliche Verfahren nach dem Stand der Technik dargestellt, bei dem vor einem Handover HO des mobilen Endgerätes von einem ersten Subsystem RNS1 zu einem zweiten Subsystem RNS2 - bzw. von einer ersten Sende-/Empfangseinrichtung Node A2 zu einer zweiten Sende-/Empfangseinrichtung Node B2 - ein Datenstrom von dem Core Network CN über die Schnittstelle Iu zu der Vermittlungseinrichtung RNC eines ersten Subsystems RNS1 geleitet wird, wobei die Vermittlungseinrichtung dann als versorgende RNC (Serving RNC oder kurz SRNC) agiert. Diese leitet den Datenstrom weiter an eine Sende-/Empfangseinrichtung Node A2 des Subsystems RNS1, welche eine bidirektionale Funkverbindung UL, DL zu dem entsprechenden mobilen Endgerät MT herstellt.

Erfolgt nun der Handover HO des Endgerätes MT zu dem zweiten Subsystem RNS2, so leitet der Serving RNC (SRNC) den Datenstrom über die Daten-Schnittstelle Iur weiter an den RNC des zweiten Subsystems RNS2, der dann als Drift RNC (DRNC) agiert. Dieser leitet dann wiederum den Datenstrom an eine Sende-/Empfangseinrichtung Node B2 des zweiten Subsystems RNS2 weiter, welche eine bidirektionale Funkverbindung UL, DL mit dem Endgerät MT zur Fortsetzung der Datenübertragung zwischen Datenübertragungssystem und Endgerät MT herstellt. Die dick gezeichneten Pfeile in Fig. 1 stellen schematisch den Pfad des Datenstroms nach dem Handover HO dar, woraus ersichtlich wird, dass der Pfad im Vergleich zum Zustand vor dem Handover durch das Umlenken vom SRNC über die Schnittstelle Iur zum DRNC verlängert wurde. Damit besteht, insbesondere bei mehrfachem Handover, die Gefahr einer deutlich erhöhten Netzlast und verringerter Datenübertragungsqualität QoS (Quality of Service).

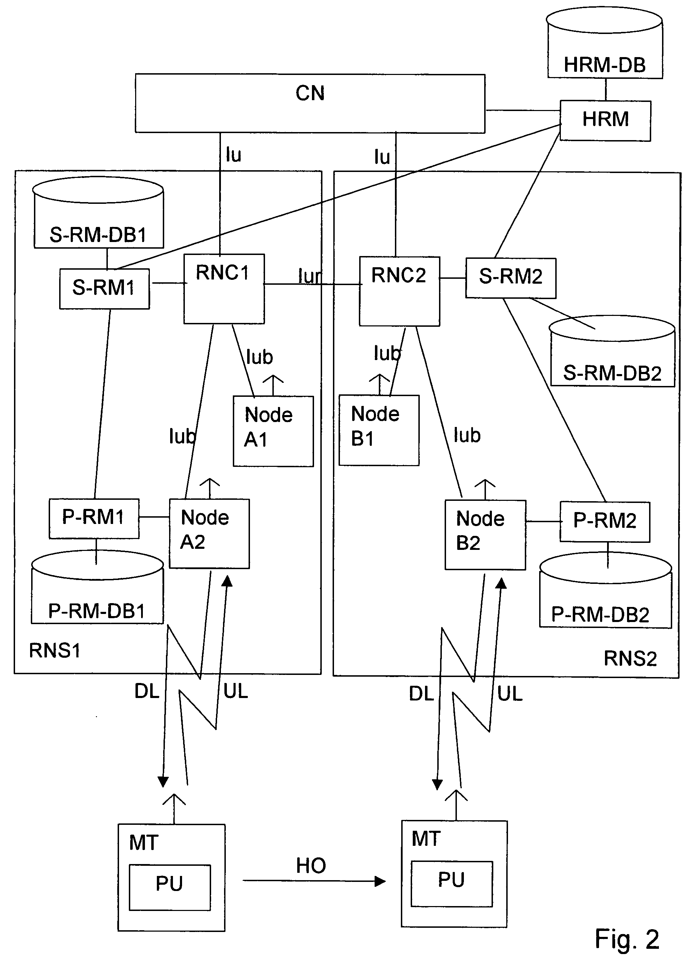

Fig. 2 zeigt ein erfindungsgemäßes Datenübertragungssystem, das zusätzlich zu den bereits anhand der Fig. 1 beschriebenen Netzkomponenten eine hierarchische Datenspeicher-Struktur aus Datenspeichern HRM-DB, S-RM-DB und P-RM-DB unterschiedlicher Hierarchieebenen aufweist. Jede Hierarchieebene der Datenspeicher HRM-DB, S-RM-DB und P-RM-DB entspricht dabei einer Hierarchieebene CN, RNC, Node A1 bis Node B2 der Struktur des Datenübertragungssytems. Außerdem sind den Datenspeichern jeweils Verwaltungseinrichtungen HRM, S-RM, P-RM zugeordnet, die insbesondere die Verfügbarkeit von angeforderten Daten in den jeweiligen Datenspeichern überprüfen. So ist das Core Network CN mit einem Datenspeicher HRM-DB verbunden, dem ein sogenannter Home Reconfiguration Manager HRM zugeordnet ist. Jeder RNC eines Subsystems RNS1, RNS2 ist mit einem Datenspeicher S-RM-DB verbunden, dem ein Serving Reconfiguration Manager S-RM zugeordnet ist. Die Sende-/Empfangseinrichtungen Node A1 bis Node B2 jedes Subsystems RNS1, RNS2 sind jeweils mit einem Datenspeicher P-RM-DB verbunden, dem jeweils ein Proxy Reconfiguration Manager zugeordnet ist.

Der HRM ist mit jedem S-RM verbunden, und jeder S-RM ist mit jedem P-RM des entsprechenden Subsystems RNS verbunden. In Fig. 2 ist der Einfachheit halber nur jeweils ein P-RM und ein P-RM-DB pro Subsystem RNS dargestellt, es sollen aber auch die übrigen Sende-/Empfangseinrichtungen Node A1, Node B1 jeweils ein P-RM und ein P-RM-DB aufweisen. Damit entsteht eine hierarchische Struktur von Datenspeichern und zugeordneten Reconfiguration Managern RM, die der ebenfalls hierarchischen Struktur des Datenübertragungssystems überlagert ist.

Die Endgeräte MT sollen als software-rekonfigurierbare Endgeräte ausgebildet sein. Sie weisen außerdem eine Einrichtung auf, die zur Kennzeichnung eines Endes (Interrupt) des Datenaustausches mit der versorgenden Sende-/Empfangseinrichtung ausgebildet ist und hier als Pointer Unit PU bezeichnet werden soll.

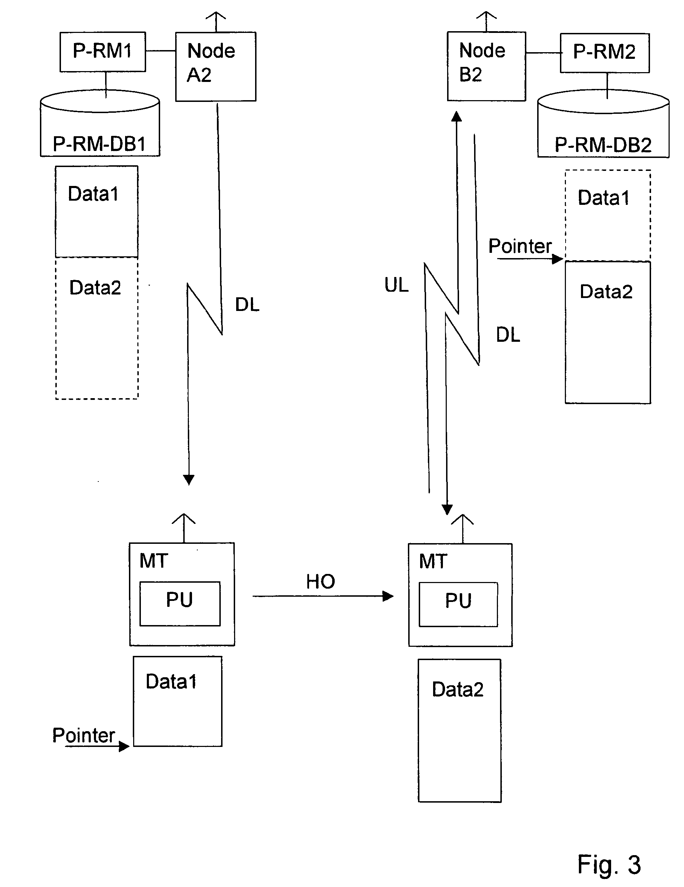

Das erfindungsgemäße Handover-Verfahren soll nun beispielhaft anhand der Fig. 2 und 3 erläutert werden. Vor einem Handover HO des Endgerätes MT werden die an das Endgerät MT im Downlink DL zu übertragenden Daten in dem Datenspeicher HRM-DB bereitgestellt. Es kann nun je nach Bedeutung der Daten beispielsweise gesteuert durch den HRM eine Übertragung der Daten an alle Datenspeicher S-RM-DB, im Beispiel der Fig. 2 also an S-RM-DB1 und S-RM-DB2 erfolgen. Nun können S-RM1 und S-RM2 wiederum je nach Bedeutung der Daten eine Übertragung an die Datenspeicher P-RM-DB1 und P-RM-DB2 des zugehörigen Subsystems RNS1, RNS2 veranlassen. Eine solche Übertragung bis zur untersten Hierarchieebene kann beispielsweise für eine Software-Rekonfigurierung aller Endgeräte MT durchgeführt werden, da in einem solchen Fall die Daten auf breiter Basis für alle Endgeräte MT verfügbar sein müssen.

Es liegen also, wie Fig. 3 zeigt, im hier dargestellten Beispiel vor dem Handover HO alle Daten Data1, Data2 in allen Datenspeichern P-RM-DB1, P-RM-DB2 der untersten Hierarchieebene vor. Es beginnt nun eine Übertragung der Daten an das Endgerät MT durch die Sende-Empfangseinrichtung Node A2 der Funkzelle RNS1. Vor dem Handover werden die Daten Data1 erfolgreich an das Endgerät MT übertragen. Die Daten Data2 können jedoch vor dem Handover HO nicht mehr an das Endgerät MT übertragen werden. Das Endgerät kennzeichnet mit Hilfe der Pointer Unit PU das Ende der Datenübertragung aus der Funkzelle RNS1 durch einen geeigneten Pointer, der insbesondere die jeweilige Adresse der zuletzt erfolgreich empfangenen Daten und gegebenenfalls auch eine Charakterisierung des zugehörigen Datenstromes enthalten kann.

Nach dem Handover des Endgerätes MT zum zweiten Subsystem RNS2 sendet dann das Endgerät MT eine Anfrage zur Fortsetzung der Datenübertragung an das Subsystem RNS2, die einen Pointer (DatenstromX, AdresseY) enthält, der anzeigt, an welcher Stelle die Datenübertragung zum Endgerät MT fortzusetzen ist. Es wird dann in der Sende-/Empfangseinrichtung eine Verbindung zum zugeordneten Reconfiguration Manager P-RM2 hergestellt, der überprüft, ob in dem Datenspeicher P-RM-DB2 dieser Hierarchieebene die angeforderten, durch den Pointer gekennzeichneten Daten Data2 verfügbar sind. Sind diese Daten verfügbar, so werden die Daten Data2 aus dem Datenspeicher P-RM-DB2 abgerufen und über die Sende-/Empfangseinrichtung Node B2 des Subsystems RNS2 an das Endgerät MT übertragen. Dieser Fall ist in Fig. 3 dargestellt. Sollten die Daten jedoch in dem Datenspeicher P-RM-DB2 der untersten Hierarchieebene nicht verfügbar sein, so wird die Anfrage durch den P-RM2 an den übergeordneten Reconfiguration Manager S-RM2 weitergeleitet, der seinerseits die Verfügbarkeit in dem zugeordneten Datenspeicher S-RM-DB2 der nun nächsthöheren Hierarchieebene überprüft. Sind die Daten dort verfügbar, dann werden sie durch den S-RM2 an die niedrigere Hierarchieebene P-RM-DB2 übermittelt und von dort aus an das Endgerät MT übertragen. Sind die Daten auch im Datenspeicher S-RM-DB2 nicht verfügbar, so wird die Anfrage an eine noch höhere Hierarchieebene HRM weitergeleitet.

Ein zentraler Vorteil der Erfindung ist, dass der Pfad der Datenübertragung nach einem Handover nicht mehr, wie beim Stand der Technik, durch mehrere Subsysteme RNS1, RNS2 verläuft, sondern nur noch durch ein einziges Subsystem RNS2, und dass außerdem besonders bedeutsame Daten direkt bei allen Sende-/Empfangseinrichtungen Node A1 bis Node B2 für einen direkten Zugriff durch die Endgeräte MT bereit gehalten werden können.

## Patentansprüche

1. Verfahren zur Durchführung eines Handovers (HO) eines mobilen Endgerätes (MT) in einem Datenübertragungssystem von einer ersten Sende-/Empfangseinrichtung (Node A2) des Datenübertragungssystems zu einer zweiten Sende-/Empfangseinrichtung (Node B2) während eines Datenaustausches zwischen dem Datenübertragungssystem und dem mobilen Endgerät (MT),
**dadurch gekennzeichnet,**
**dass** bei der Datenübertragung in der Abwärtsrichtung (DL) zu dem mobilen Endgerät (MT) die zu übertragenden Daten (Data1, Data2) parallel an mehrere Datenspeicher (P-RM, S-RM) des Datenübertragungssystems weitergeleitet werden, wobei die Datenübertragung vor dem Handover (HO) von einem ersten Datenspeicher (P-RM-DB2) und nach dem Handover (HO) von einem zweiten Datenspeicher (P-RM-DB3) zu dem mobilen Endgerät (MT) erfolgt.

2. Verfahren nach Anspruch 1,
**dadurch gekennzeichnet,**
**dass** die Datenspeicher (P-RM, S-RM) jeweils zumindest einer Vermittlungseinrichtung (RNC1, RNC2) und/oder Sende-/Empfangseinrichtung (Node A1, Node A2, Node B1, Node B2) des Datenübertragungssystems zugeordnet sind.

3. Verfahren nach Anspruch 1 oder 2,
**dadurch gekennzeichnet,**
**dass** das Ende der Datenübertragung von dem ersten Datenspeicher (P-RM-DB2) durch das mobile Endgerät (MT) gekennzeichnet wird und diese Kennzeichnung (Pointer) zur Fortsetzung der Datenübertragung von dem zweiten Datenspeicher (P-RM-DB3) übertragen wird.

4. Verfahren nach einem der Ansprüche 1 bis 3,
**dadurch gekennzeichnet,**
**dass** die zum mobilen Endgerät (MT) zu übertragenden Daten (Data1, Data2) automatisch oder gesteuert durch eine Anfrage des mobilen Endgerätes (MT) jeweils hierarchisch von einer übergeordneten Hierarchieebene der Datenspeicher (P-RM-DB, S-RM-DB, HRM-DB) an eine untergeordnete Hierarchieebene der Datenspeicher (P-RM-DB, S-RM-DB, HRM-DB) übertragen werden.

5. Verfahren nach Anspruch 4,
**dadurch gekennzeichnet,**
**dass** die vom mobile Endgerät (MT) übertragene Kennzeichnung an die unterste Hierarchieebene der Datenspeicher (P-RM-DB, S-RM-DB, HRM-DB) weitergeleitet wird, innerhalb dieser Hierarchieebene eine Überprüfung der Verfügbarkeit der an das Endgerät (MT) zu übertragenden Daten (Data1, Data2)erfolgt, und
- bei Verfügbarkeit der zu übertragenden Daten (Data1, Data2) eine unmittelbare Fortsetzung der Datenübertragung zu dem mobilen Endgerät (MT) ausgehend von dem Datenspeicher (P-RM-DB, S-RM-DB, HRM-DB) der untersten Hierarchieebene erfolgt,
- bei Nicht-Verfügbarkeit der zu übertragenden Daten zuerst eine Anfrage an eine übergeordnete Hierarchieebene der Datenspeicher (P-RM-DB, S-RM-DB, HRM-DB) zur Übertragung der Daten (Data1, Data2) an die unterste Hierarchieebene der Datenspeicher (P-RM-DB, S-RM-DB, HRM-DB) erfolgt und anschließend eine Fortsetzung der Datenübertragung zu dem mobilen Endgerät (MT) ausgehend von dem Datenspeicher (P-RM-DB, S-RM-DB, HRM-DB) der untersten Hierarchieebene erfolgt.

6. Datenübertragungssystem mit mehreren Sende-/Empfangseinrichtungen (Node A1, Node A2, Node B1, Node B2) und Vermittlungseinrichtungen (RNC1, RNC2) zum Datenaustausch mit mobilen Endgeräten (MT),
**dadurch gekennzeichnet,**
**dass** innerhalb des Datenübertragungssystems mehrere Datenspeicher (P-RM-DB, S-RM-DB, HRM-DB) vorgesehen sind, welche Vermittlungseinrichtungen (RNC1, RNC2) und/oder Sende-/Empfangseinrichtungen (Node A1, Node A2, Node B1, Node B2) des mobilen Datenübertragungssystems zugeordnet sind, und die zur Speicherung von Daten (Data1, Data2), welche zu einem mobilen Endgerät (MT) übertragbar sind, ausgebildet sind.

7. Datenübertragungssystem nach Anspruch 6,
**dadurch gekennzeichnet,**
**dass** das Datenübertragungssystem eine hierarchische Netzstruktur aus Sende-/Empfangseinrichtungen (Node A1, Node A2, Node B1, Node B2) und Vermittlungseinrichtungen (RNC1, RNC2) und übergeordneten Netzstrukturen (CN) aufweist und die Datenspeicher (P-RM-DB, S-RM-DB, HRM-DB) ebenfalls eine hierarchische Struktur aufweisen, bei der jede Hierarchieebene einer entsprechenden Hierarchieebene der Netzstruktur des Datenübertragungssystems entspricht.

8. Datenübertragungssystem nach Anspruch 7,
**dadurch gekennzeichnet,**
**dass** zumindest den Datenspeichern (P-RM-DB, S-RM-DB, HRM-DB) der untersten Hierarchieebenen eine Einrichtung (P-RM, S-RM, HRM) zugeordnet ist, die zur Überprüfung einer Verfügbarkeit der zu übertragenden Daten (Data1, Data2) in dem entsprechenden Datenspeicher (P-RM-DB, S-RM-DB, HRM-DB) und zur Einleitung einer Übertragung der zu übertragenden Daten (Data1, Data2) bei Nicht-Verfügbarkeit von einer übergeordneten Hierarchieebene der Datenspeicher (P-RM-DB, S-RM-DB, HRM-DB) an den zugeordneten Datenspeicher (P-RM-DB, S-RM-DB, HRM-DB) ausgebildet ist.

9. Mobiles Endgerät (MT) für ein Datenübertragungssystem mit mehreren Sende-/Empfangseinrichtungen (Node A1, Node A2, Node B1, Node B2) und Vermittlungseinrichtungen (RNC1, RNC2) zum Datenaustausch mit mobilen Endgeräten (MT),
**dadurch gekennzeichnet,**
**dass** das mobile Endgerät (MT) eine Einrichtung (PU) zur Kennzeichnung (Pointer) eines Endes der Datenübertragung von einem ersten Datenspeicher (P-RM-DB2) über eine erste Sende-/Empfangseinrichtung (Node A2) und zur Übertragung einer Kennzeichnung (Pointer) an eine zweite Sende-/Empfangseinrichtung (Node A2, Node B2) aufweist.

10. Mobiles Endgerät nach Anspruch 9,
**dadurch gekennzeichnet,**
**dass** das mobile Endgerät (MT) als software-rekonfigurierbares Endgerät ausgebildet ist.
